# EUROPEAN PATENT APPLICATION

(11) **EP 1 244 044 A1**
(43) Date of publication of application: **25.09.2002**
(21) Application number: 02252064.7
(22) Date of filing: 22.03.2002
(51) Int. Cl.: G06F 17/60

(54) **Open-end fund options plan for key personnel and a system and a method for administering same**

(30) Priority: 22.03.2001 US 277842 P
(71) Applicant: Deloitte & Touche Llp, Wilton, CT 06897 (US)
(72) Inventor: Calvin, James N., Lexington, Massachusetts 02420 (US)
(74) Representative: Potter, Julian Mark

(57) **Abstract**

A computer implemented method for incentivizing an open-end fund service provider to defer compensation owed to the service provider that includes the step of granting the service provider an award of options in an investment fund having a share price based on a net asset value of the fund. Also provided is a computer-based administration system to calculate the value of one or a series of options or similarly leveraged compensation arrangements granted by an open-end fund to service providers, summarize the values of those options, calculate the change in values since the prior valuation, and calculate expenses associated with the options, and calculate the NAV of shares offered and/or redeemed by the granting open-end fund.

## Description

This Application claims priority from previously filed U.S. Provisional Patent Application No. 60/277,842 filed on March 22, 2001, the disclosure of which is incorporated by reference in its entirety.

The present invention is generally directed to an incentive plan for providing key personnel with the opportunity to defer compensation.

As is known, Open-end Investment Funds ("Open-end Fund(s)") are organized in a manner which minimizes entity level taxes. Some Open-end Funds are operated as registered investment companies or organized in low or no tax jurisdictions and treated as corporations for U.S. federal income tax purposes. In addition, some Open-end Funds may be organized as partnerships.

A distinguishing feature of an Open-end Fund is that shareholders and investors may purchase or redeem shares from the Open-end Fund at a price which is based on the net asset value (hereinafter also "NAV") of the class or series of interest held by the shareholder or investor. Open-end Funds may offer as often as daily to sell and redeem shares at NAV.

The NAV of a fund is calculated on a periodic basis as prescribed in its organizing or offering documents. The NAV is calculated by subtracting the current market or other value of liabilities from the current market or other value of assets. This fund-level NAV may be further reduced by specific fees and expenses or adjusted for specifically allocated profit or loss where separate classes or series of equity interests are offered by the Open-end Fund.

Such fees and expenses may include fees equal to a share of the net annual profit that are sometimes paid to investment advisors and other service providers for providing investment advisory services to the Open-end Fund ("Incentive Fee"). Incentive Fees for certain unregistered Open-end Funds colloquially known as "hedge funds" are often equal to 20% of annual net profits but can be more or less and subject to adjustments (e.g., loss carry-forwards, hurdles, high water marks, claw-backs, etc.) depending on the advisory contract. In some cases, an Incentive Fee may only apply to some classes or series of equity interests and not others or may be lowered for some.

In addition, other investment advisors may provide management, and other services like accounting and administration to an Open-end Fund in return for a fee ("Management Fee"). In many cases, an affiliate of the investment adviser will provide some or all of these other services to the Open-end Fund. The Management Fee is usually determined as a percentage of the NAV of the Open-end Fund. The Management Fee can be determined and payable based on numerous factors and at varying times but is often charged pro rata at the beginning of a period.

It is also well known that a business or company may establish a nonqualified stock option plan that awards certain investment advisors, service providers and other key personnel (hereinafter "Service Providers") compensatory options in lieu of current compensation for the purpose of retaining such Service Providers through vesting and other restrictions on the subsequent transfer of awarded options. The Service Providers are incentivized to accept compensatory options in lieu of cash or similar property by the possibility that the awarded options will appreciate in value (sometimes significantly) beyond the current value of compensation that the Service Providers forego. Additionally, Service Providers who accept compensatory options in lieu of current compensation may be entitled to defer the payment of certain applicable U.S. federal income taxes that would otherwise be due on current compensation.

An example of a standard non-qualified options plan (hereinafter "Options Plans") that is currently available is offered by Deloitte & Touche LLP under the registered service mark KEYSOP®. Like other non-qualified stock options plans, the KEYSOP® plan is designed to retain key employees through restrictions on transfer, vesting, and exercise and, may also provide for the deferral of taxable income.

Although Options Plans are known that incentivize a Service Provider to forego current compensation in favor of an award of options on certain publicly traded securities of a company, there is not known an Options Plan that awards Service Providers with options on the property that comprises an Open-end Fund. Moreover, there is not known an Options Plan that is granted by an offshore Open-end Fund to U.S. based Service Providers in lieu of current compensation.

Additionally, there is not known an administrative system for administering and valuing an Open-end Fund Options Plan that is granted both directly and indirectly, as well as the NAV of other Open-end Fund shares. Options granted by an Open-end Fund create substantial administrative complexity because of the interaction between the values of such options and the NAV of fund shares.

Accordingly, a non-qualified options plan that allows certain key personnel to elect an award of options granted by an Open-end Fund in lieu of current compensation and a system and method for administering an award of options are provided. The Open-end Fund Options Plan Administration System of an embodiment of the present invention provides for the accurate valuation of both options granted by an Open-end Fund and the NAV of other fund shares.

Accordingly viewed from a first aspect, there is provided an Options Plan for awarding options to Service Providers under which they may purchase designated property or receive cash equal to the value of designated property from an Open-end Fund at a price set forth in the award (hereinafter the "Open-end Fund Options Plan"). The terms of the exercise price will vary, but the exercise price is often established as a percentage of the fair market or other value of the property at the time of the grant of the option. The Open-end Fund Options Plan may provide that the property to be delivered are shares of the Open-end Fund, shares in another fund, may be settled in cash equal to the value of some index or designated shares of the Open-end Fund, or any other property which may be unitized and valued on a periodic basis.

The Open-end Fund Options Plan may be granted by an offshore Open-end Fund to a Service Provider in lieu of cash or other property. Alternatively, the Open-end Fund Options Plan may be granted indirectly by an Open-end Fund if the Open-end Fund is a partner in a partnership and the partnership grants an Open-end Fund Options Plan.

In another aspect of the present invention a method for incentivizing an open-end fund service provider to defer compensation owed to the service provider is provided that includes the steps of granting the service provider an award of options in an investment fund having a share price based on a net asset value. The options have a specified term and an initial value based on the net asset value and the value of the options is adjusted based on the change in value of the net asset value of the fund. In addition, an option may include a "knock-out" or "barrier" term which may provide that the offer to sell under such option is revoked if the underlying property subject to the option decreases to a certain value.

In another aspect of the present invention, if the Open-end Fund Options Plan is granted to a Service Provider, then the Service Provider may grant interests in the Open-end Fund Options Plan to related key persons, principals, employees or independent contractors who provide services to the Service Provider and/or the Open-end Fund.

In a still further aspect of the present invention, an administration system is provided for administering and valuing an Open-end Fund Options Plan that is granted both directly and indirectly and the NAV of other fund shares. To that end, a system is provided for administering an Open-end Fund having outstanding fund shares issued to account holders and options granted to option holders including a database for storing beginning values for each of the outstanding shares and options, and an administrative engine in communication with the database for calculating new values for each of the fund shares and options based on a change in a net asset value of the Open-end Fund.

Accordingly, an aspect of the present invention provides a method for compensating key personnel/service providers with options in an Open-end Fund.

Another aspect of the present invention provides a method for incentivizing an open-end fund service provider to defer compensation owed to the service provider that includes the steps of granting the service provider an award of options in an investment fund having a share price based on a net asset value, which value can be adjusted based on the change in value of the net asset value of the fund.

Another aspect of the present invention provides an administration system for administering and valuing an Open-end Fund Options Plan that is granted both directly and indirectly and the NAV of other fund shares.

Still other aspects and advantages of the present invention will in part or whole be apparent from the specification.

One or more embodiments of the present invention accordingly comprise the several steps and the relation of one or more of such steps with respect to each of the others, and embody features of construction, combination of elements, and arrangement of parts which are adapted to effect such steps, all as exemplified in the detailed disclosure hereinafter set forth.

Embodiments of the present invention will now be described by way of example only and with reference to the accompanying drawings, in which:
FIG. 1 is a graphical depiction of an illustrative arrangement for an Open-end Fund;
FIG. 2 is a graphical depiction of an alternative arrangement for an Open-end Fund;
FIG. 3 depicts an overview of the major elements of the administration process for the Open-end Fund Options Plan according to an illustrative embodiment of the present invention;
FIG. 4 depicts the information flow of an Open-end Fund Options Plan Administration System according to an illustrative embodiment of the present invention;
FIG. 5 illustrates the steps for calculating the values of Open-end Fund shares according to an illustrative embodiment of the present invention;
FIG. 6 illustrates the steps for calculating the value of Open-end Fund Options Plan Series according to an illustrative embodiment of the present invention;
FIG. 7 is a sample report for Open-end Fund Options Plan Series Granted on a No-Fee Class of Share in an Open-end Fund according to an illustrative embodiment of the present invention; and
FIG. 8 shows a sample report of net asset value per share and net asset value per Open-end Fund Options Plan Series according to an illustrative embodiment of the present invention.

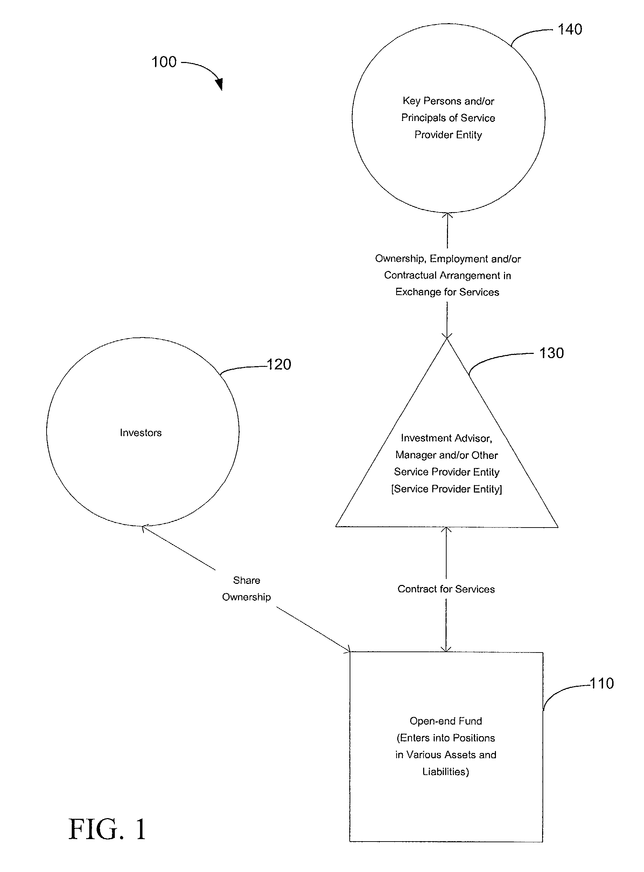

Referring to FIG. 1, the general organization and relationship of the parties (e.g., investors, key personnel) of a first example of an Open-end Fund is graphically depicted and generally shown as 100. The Open-end Fund 110 may be organized as a corporate or partnership-type entity which offers shares or equity interests to investors 120. Open-end Fund 110 may issue a number of different classes or series of shares having different terms and conditions including different types and magnitudes of fees and expenses and specially allocated profits and losses. Investors 120 typically purchase or redeem shares in the Open-end Fund 110 at the net asset value per share.

As discussed in the background section above, Open-end Funds are organized and operated to allow for the purchase and redemption of shares at a price determined by the NAV of the class or series of interest held by each of the Investors 120. The Open-end Fund 110 may offer as often as daily to sell and redeem shares at NAV.

Generally speaking, the NAV of the Open-end Fund 110 is calculated on a periodic basis as prescribed in its organizing or offering documents. The NAV is calculated by subtracting the current market or other value of liabilities from the current market or other value of assets. This fund-level NAV may be further reduced by specific fees and expenses or adjusted for specifically allocated profit or loss where separate classes or series of equity interests are offered by the Open-end Fund. Such fees and expenses may include fees equal to a share of the net annual profit that are sometimes paid to Service Providers for providing investment advisory services to the Open-end Fund, as well as fees related to management, accounting and administration services provided to the Open-end Fund by the Service Providers.

As shown in FIG. 1, Service Providers 130 typically enter into contracts for services to the Open-end Fund 110. One or more Service Providers 130 may be compensated in cash, property or awards of compensatory options under an Open-end Fund Options Plan according to an embodiment of the present invention. The Open-end Fund Options Plan may be granted by an offshore Open-end Fund to a Service Provider in lieu of cash or other property.

The Open-end Fund Options Plan may provide that the property to be delivered is shares of the Open-end Fund, shares in another fund, a cash settlement equal to the value of some index or designated shares of the Open-end Fund, or any other property which may be unitized and valued on a periodic basis. The Open-end Fund may acquire the underlying property and allocate the gains and losses from that property specifically to a particular Open-end Fund Options Plan account.

The assets or cash-value subject to the option may be transferred to the Service Providers upon the exercise of their options, or retained by the Open-end Fund to the extent that options expire without having been exercised. Options may be exercised after the expiration of a period of time designated in the award. The expiration date of the option is specified in the award. When an option is exercised, the Open-end Fund is obligated to transfer the designated property or cash-value covered by the option to the Service Provider in return for his tender of the exercise price or, if the option is cash settled, the net cash-value may be transferred without tender of the exercise price.

In an alternative embodiment, the Service Providers 130 may directly enter into contracts with the fund 110 or employ other Service Providers or persons 140 to provide services to the Open-end Fund 110. If the Open-end Fund Options Plan is granted to a Service Provider, then the Service Provider may grant interests in the Open-end Fund Options Plan to related key persons, principals, employees or independent contractors who provide services to the Service Provider and/or the Open-end Fund. The Service Provider then accounts for each beneficiary's interest in the Open-end Fund Options Plan.

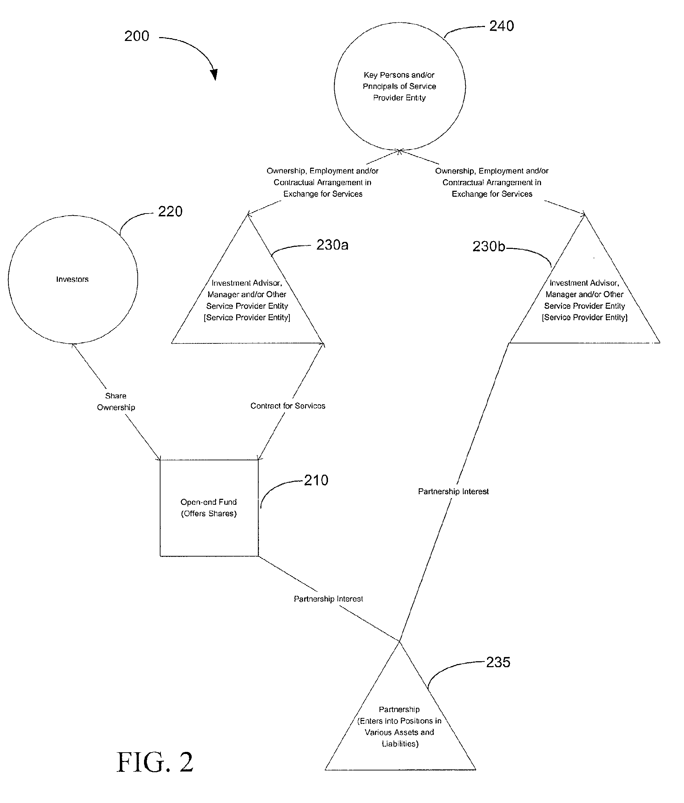

Alternatively, the Open-end Fund Options Plan may be granted indirectly by an Open-end Fund if the Open-end Fund is a partner in a partnership and the partnership grants an Open-end Fund Options Plan, as shown in FIG. 2. FIG. 2 graphically depicts an alternative arrangement for an Open-end Fund that is generally shown as 200. As in FIG. 1, Investors 220 are offered shares or equity interests in an Open-end Fund 210. The Open-end Fund 210 invests in a partnership through a partnership interest. Service Providers 230a may enter into contracts to provide services and/or Service Provider 230b may hold a partnership interest in the Partnership 235. As before, Service Providers 230a, 230b may enter into contracts or employ other Service Providers or persons 240 to provide services to the Open-end Fund 210. Service Providers 230a, 230b may receive their compensation in cash, property, partnership profits or awards of compensatory options under an Open-end Fund Options Plan according to an embodiment of the present invention.

According to an embodiment of the present invention, an administration system is also provided for administering and valuing an Open-end Fund Options Plan that is granted both directly and indirectly. For purposes of illustration, this description is made with respect to an Open-end Fund Options Plan that is granted directly by the Open-end Fund; however, the process is virtually the same for both direct and indirect grants. Separate accounts can be established for each period and each type of designated property for which an Open-end Fund Options Plan is granted. These separate accounts are each referred to for convenience as "Open-end Fund Options Plan Series" or "Series." As will be explained hereinafter, each Series is separately valued for purposes of calculating net asset values of shares in the Open-end Fund.

An administration system and method according to an embodiment of the present invention is capable of administering the seemingly infinite number of alternatives available for designing an Open-end Fund Options Plan according to aspects of the present invention. In most cases the design alternatives are merely a matter of degree or magnitude which can be generalized into several valuation variables, as described hereinafter, for administering the Open-end Fund Options Plan. The Open-end Fund Options Plan can be valued as frequently as on a daily basis, but at least as often as when the Open-end Fund is revalued.

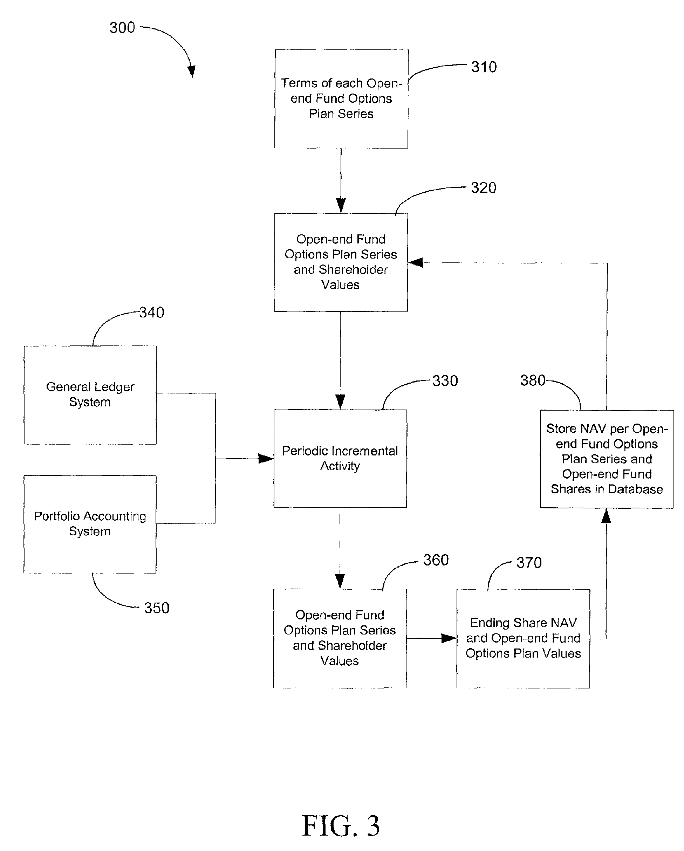

FIG. 3 provides an overview (generally shown as 300) of the major elements of the administration process for an Open-end Fund Options Plan according to an illustrative embodiment of the present invention. These process or method steps to be carried out by a system in accordance with an embodiment of the present invention preferably utilize a spreadsheet software program such as Microsoft Excel®. The elements illustrated in Fig. 3 may be implemented by a suitably configured computer system. Optionally, one or more elements may be implemented in separate computer systems, each such computer system configured to communicate with one or more other computer systems implementing one or more elements over a suitable communications system.

Referring further to FIG. 3, in a first step 310 of the administration process 300, the terms and conditions for each Series awarded under the Open-end Fund Options Plan are established. These terms and conditions which may include exercise price, knockout price, expiration date and units subject to option are input into an administration system and stored in a shareholder database for valuation purposes of each Series. Next, the beginning values for each of the Open-end Fund Option Plan Series and Open-end Fund shares is obtained in step 320. These values are either calculated and stored in a shareholder database, if this is a new Open-end Fund Option Plan Series grant, or retrieved from the shareholder database (see step 380) if previously valued.

In step 330, the periodic incremental activity is calculated and allocated. Periodic incremental activity is retrieved from the general ledger in step 340 and portfolio accounting system in step 350. Periodic incremental activity may also include expenses and financing costs, and specially allocated profits and losses associated with an Open-end Fund Options Plan Series if applicable under the terms and conditions 310 of an Open-end Fund Options Plan Series grant. Next, in step 360, the ending Open-end Fund share and Open-end Fund Options Plan Series values are derived.

In step 370 an NAV on a per share class or series basis and a net value for each Open-end Fund Options Plan Series are derived. The NAV of an Open-end Fund is used for the purpose of determining the price at which investors may purchase fund shares or redeem fund shares. The NAV of a fund is calculated on a periodic basis as prescribed in its organizing or offering documents. An NAV is calculated by subtracting the current market or other value of liabilities from the current market or other value of assets. This fund-level NAV may be further reduced by specific fees and expenses or adjusted for specifically allocated profit or loss where separate classes or series of equity interests are offered by the Open-end Fund.

As previously discussed, such fees and expenses may include fees equal to a share of the net annual profit that are sometimes paid to investment advisors and other service providers for providing investment advisory services and other services like accounting and administration to an Open-end Fund in return for a fee. The fees may be fixed fees or determined as a percentage of the NAV of the Open-end Fund and payable based on numerous factors and at varying times but is often charged pro rata at the beginning of a period.

In step 380, the NAV per share, net value for each Open-end Fund Options Plan Series, and share and Open-end Fund Options Plan Series registrations are stored and maintained in a shareholder database. Upon revaluation, the beginning values for the Open-end Fund Options Plan Series and Open-end Fund Shares are retrieved from the shareholder database as in step 320.

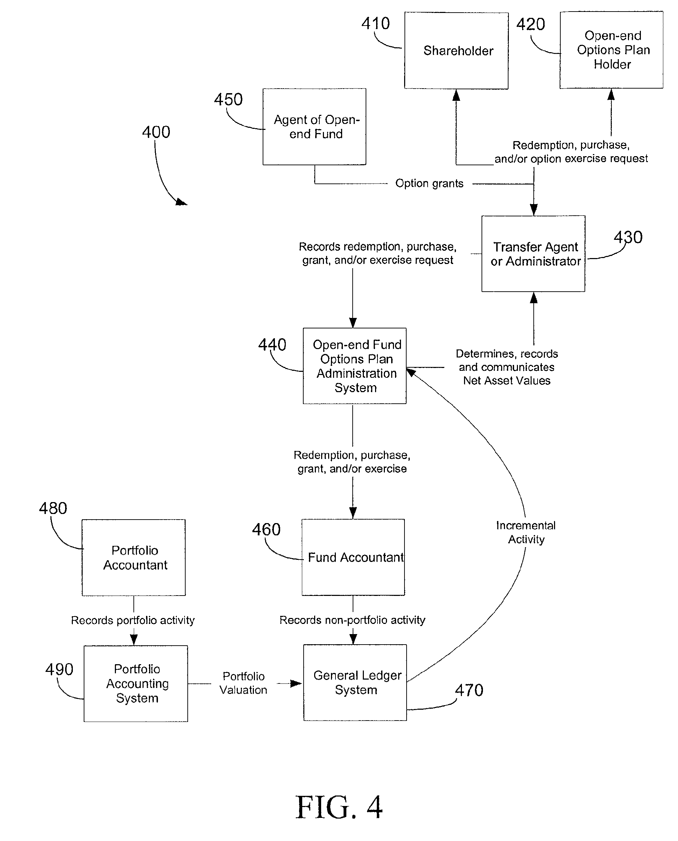

FIG. 4 depicts the information flow to and from an administration system for an Open-end Fund Options Plan according to an illustrative embodiment of the present invention, which is generally shown as 400. In an illustrative embodiment, the administration system is developed using a spreadsheet software program such as Microsoft Excel®. The elements illustrated in Fig. 4 may be implemented by a suitably configured computer system. Optionally, one or more elements may be implemented in separate computer systems, each such computer system configured to communicate with one or more other computer systems implementing one or more elements over a suitable communications system.

As shown in FIG. 4, a shareholder 410 of the Open-end Fund (e.g., 110 of FIG. 1) requests redemptions or purchases of shares or a holder 420 of options under the Open-end Fund Options Plan (e.g., Service Provider) exercises an option and requests the proceeds from a transfer agent or administrator 430. The transfer agent or administrator 430 enters the information into the Open-end Fund Options Plan Administration System 440. An agent 450 of the Open-end Fund is preferably responsible for granting all options under the Open-end Fund Options Plan and communicating this information to the transfer agent or administrator 430.

The fund accountant 460 accesses the Open-end Fund Options Plan Administration System 440 for redemption, purchase, grant and/or exercise information. The fund accountant 460 enters this information and other non-portfolio information into the general ledger system 470. A portfolio accountant 480 enter portfolio valuation information into a portfolio accounting system 490 which then transfers the portfolio valuation information into the general ledger system 470.

As discussed in connection with step 330 of FIG. 3, incremental activity from the general ledger system 470 is transferred into the Open-end Fund Options Plan Administration System 440. The transfer agent or administrator 430 then operates the system 440 in order to determine net asset values for shares and net values for Open-end Fund Option Plan Series. The transfer agent or administrator 430 communicates these values to shareholders, investors and Open-end Fund Option Plan options holders and, based on these values, also accepts proceeds for the purchase of shares, and disburses proceeds on the redemption of shares and exercise of Open-end Fund Option Plan options.

It should be noted that the information and data described in FIG. 4 may be transferred in whole or in part by physical transfer of printed or computer-readable media, or over communication lines.

The Open-end Fund Options Plan Administration System 440 determines a NAV primarily for the purposes of reporting to shareholders and investors and also to determine values at which shareholders and investors may redeem or purchase shares of the Open-end Fund. In addition, options granted by an Open-end Fund create substantial administrative complexity because of the interaction between the values of such options and the NAV of fund shares. In particular, it is necessary for any Open-end Fund which has granted options under an Open-end Fund Options Plan to recalculate the value of such options to reflect any changes in the value of such options that will increase or decrease the net asset values of other shareholders or investors in the Open-end Fund. If an Open-end Fund Options Plan series of options is canceled or expires, the value of that Open-end Fund Options Plan series is no longer an offset to net assets and is re-allocated between accounts.

Accordingly, as shown in FIGS. 3 and 4, an Open-end Fund Options Plan Administration System 440 is provided that interfaces with the General Ledger System and Portfolio Accounting System to account for the value of each Open-end Fund Options Plan Series and the resulting value of shares offered and/or redeemed by the Open-end Fund.

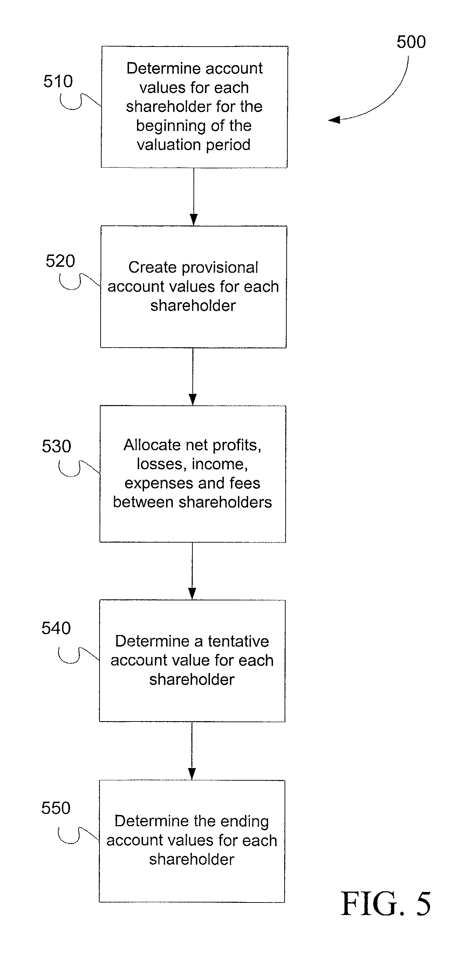

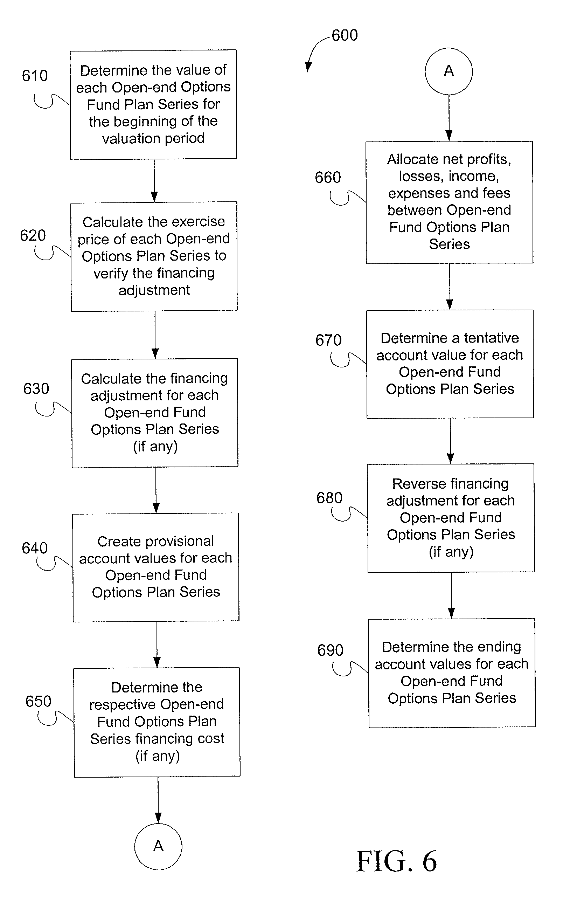

Referring now to FIG. 5, the steps for calculating the values of Open-end Fund shares are illustrated. FIG. 6 separately illustrates the steps for calculating the values of Open-end Fund Options Plan Series. Although the steps for calculating the values of Open-end Fund shares and Open-end Fund Options Plan Series are shown as a separate process in FIGS. 5 and 6, as discussed below, an administration system according to a preferred embodiment of the present invention can complete certain of the calculations as part of a single continuous process, such as steps 530 and 660 in FIGS. 5 and 6, respectively.

Referring specifically to FIG. 5, the steps for calculating the values of Open-end Fund shares are generally shown as 500. In a first step 510, account values are determined for the beginning of the valuation period for each shareholder of the Open-end Fund. Account values are determined by multiplying the per share net asset value (NAV) of a class or series by the number of such shares held. The net asset values used for this calculation are those determined as the ending net asset values for the prior revaluation period. Shares held at the beginning of the period are those held at the prior revaluation period plus those actually or deemed acquired as of the end of the prior revaluation period minus those actually or deemed disposed of as of the end of the prior revaluation period.

In step 520, a Provisional Account value is created for each shareholder. The shareholder Provisional Account value is equal to such shareholder's beginning account value, since adjustments to the account value are not made. However, any adjustments to beginning account value would be reflected as an adjustment as in the case of the options.

Next, in step 530, net profits, losses, income, expenses, and fees (including specifically allocated items) are allocated between shareholders. As discussed below, this step is also performed with respect to each Open-end Fund Options Plan Series based upon the terms which apply to each respective class or series of shares.

In step 540, a Tentative Account value is determined for each shareholder by adding any allocated amounts from the previous step to the Provisional Account value for each shareholder. The ending account values for each shareholder are calculated in step 550. The ending account values will be equal to the net asset value per share for the class or series of shares held by a shareholder.

Referring now to FIG. 6, the process for valuing Open-end Fund Options Plan Series is generally shown as 600. In a first step 610, the value of each Open-end Fund Options Plan Series is determined for the beginning of the valuation period. This value is equal to the ending value for the prior valuation period or, for a grant under an Open-end Fund Options Plan at the end of the prior valuation period, is equal to the total value of the underlying property (typically based on prior valuation NAV) less the total exercise price of such Open-end Fund Options Plan grant. The beginning value of each Open-end Fund Options Plan Series is adjusted for options exercised or expired as of the end of the prior revaluation period or as of the beginning of the current valuation period.

In step 620, the exercise price of each Open-end Fund Options Plan Series is retrieved or optionally calculated for purposes of verifying the Financing Adjustment in step 630. This calculation may not always be required depending on the underlying terms of the grant, but is necessary where, for example, an Open-end Fund Options Plan Series includes provisions such as adjusting for the exercise price to include a financing or cost of carry charge. Generally, the exercise price of an existing Open-end Fund Options Plan Series has been stored and is retrieved. A new grant will require that the calculation be initiated and the value stored.

In step 630, a Financing Adjustment, if any, is calculated for each Open-end Fund Options Plan Series by subtracting the beginning Open-end Fund Options Plan Series account value from the beginning value of the underlying property. The difference is the Financing Adjustment which, depending on the terms of a particular Open-end Fund Options Plan, may be subject to a financing or cost of carry charge. The Financing Adjustment is verified as the exercise price of the Open-end Fund Options Plan Series, determined in the previous step, when multiplied by the number of shares or units subject to the option.

In step 640, a Provisional Account value is created for each Open-end Fund Options Plan Series. The Provisional Account value for each Open-end Fund Options Plan Series is equal to the beginning account value (*i*.*e*., the net value of the Open-end Fund Options Plan Series) plus the Financing Adjustment (i.e., the exercise price of the Open-end Fund Options Plan Series multiplied by the number of shares or units subject to the option). Shareholder account values are not adjusted and a shareholder Provisional Account value is equal to such shareholder's beginning account value.

In step 650, net profits, losses, income, expenses, and fees (including specifically allocated items) are allocated between shareholders and to each Open-end Fund Options Plan Series based upon the terms which apply to each respective class or series of shares. A fund which has granted Open-end Fund Options Plan options may have issued numerous classes or series of shares, and each separate class or series can be subject to separate terms and conditions including the allocation of profits and losses and the types and magnitude of fees and expenses which are charged to the class or series. Generally, the Open-end Fund Options Plan Series Financing Cost is allocated specifically to each respective Open-end Fund Options Plan Series subject to a Financing Cost.

In step 660, the Financing Cost is determined, if any, for each Open-end Fund Options Plan Series requiring a Financing Cost adjustment for the period. The determination of a particular Open-end Fund Options Plan Series Financing Cost varies depending on the underlying terms of the grant. For example, the Financing Cost may be equal to a cost of funds multiplied by the Financing Adjustment.

In step 670, a Tentative Account value is determined for each shareholder and each Open-end Fund Options Plan Series by adding the allocated amounts from the previous step to the Provisional Account value for each. The Financing Adjustment, if any, for each Open-end Fund Options Plan Series may be reversed in step 670 by subtracting the Financing Adjustment from the Provisional Account value. The ending account values for each shareholder and the ending account values for each Open-end Fund Options Plan Series is calculated in final step 680. The ending account values will be equal to the net asset value per share for the class or series of shares held by a shareholder.

These steps in FIGS. 5 and 6 are repeated for each valuation period. The results are stored and available for display, printing and reporting.

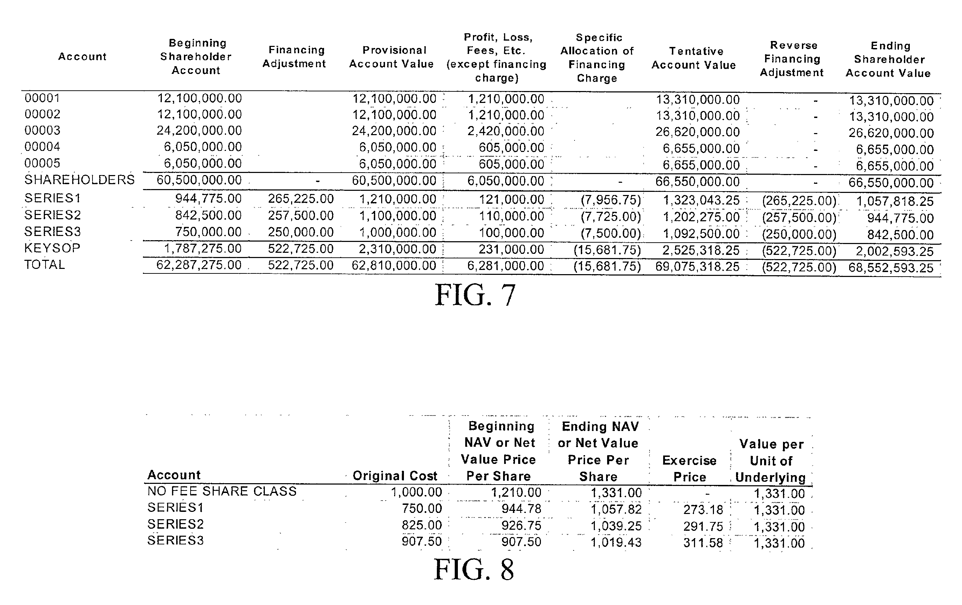

According to a preferred embodiment of the present invention, the administration system also reports the values of Open-end Fund shares and Open-end Fund Options Plan Series based on the steps set forth in FIGS 5 and 6. A report, based upon simplified assumptions, shows the calculations performed for an Open-end Fund offering a single class of fund shares and upon which it has granted three Open-end Fund Options Plan Series at different dates and at different values is shown in FIG. 7. In the example of FIG. 7, both a Financing Adjustment and Financing Cost have been assumed. FIG. 8 shows a report of an example of a proof of NAV for each Open-end Fund Options Plan Series shown in FIG. 7 and the class of share upon which the Open-end Fund Options Plan Series was granted.

Referring further to FIG. 7, five hypothetical shareholders are indicated by the account numbers 00001 through 00005 and three hypothetical Open-end Fund Options Plan Series are indicated as Series1, Series2 and Series3. As shown in FIG. 8, a beginning NAV of 1,210.00 has been assumed for this example. Based on the beginning NAV, it is apparent that the shareholders of Accounts 00001 and 00002 are each in possession of 10,000 shares, the shareholder of Account 00003 is in possession of 20,000 shares and the shareholders of Accounts 00004 and 00005 are each in possession of 5,000 shares.

Referring now to the steps shown in FIG. 5, a provisional account is created for each shareholder account, as shown in column 2 of FIG. 7. In this example, the beginning shareholder values were retrieved from a database for the current valuation period. The total for all shareholder accounts is $60,500,000.00. Next the profits, etc. are allocated between the shareholders based on each shareholder's account value. As shown in FIG. 7, each shareholder received a net of 10% of their account value based on each shareholder's provisional account value as indicated in column 4. The total for each shareholder is then entered as a tentative account value, which for all shareholders becomes the ending shareholder account value as indicated in the final column of FIG. 7.

The following additional assumptions can be gleaned from FIGS. 7 and 8, three Series have been issued under an Open-end Options Plan. There are 1,000 shares of Series1 outstanding at the time of valuation period in this example. Likewise, there are 909.09 shares and 826.45 shares outstanding for Series2 and Series3, respectively. As shown, Series1 options were based on a no fee share class having an original cost of $1,000.00, a spread of $750.00 and an exercise price of 25% of the original cost or $250.00, as shown in FIG. 8.

Referring to FIG. 6, the first step performed by an administration system according to an illustrative embodiment of the present invention is to determine the beginning account value of each Open-end Options Plan Series. This account value is equal to the ending account value for the prior valuation period which for Series1 shares or units is equal to $944,775.00, and for Series2 shares or units is $842,500.00, as shown in FIG. 7. These values were stored during a prior valuation period and retrieved during the present valuation period by the administration system.

Because the Series3 shares or units have the same original cost and beginning NAV as shown in FIG. 8, Series3 shares or units are considered newly granted options for purposes of this example. Accordingly, the beginning account value for Series3 shares is calculated by multiplying the number of Series3 shares or units (826.45) by the beginning NAV/original cost ($907.50), which equals $750,000.00. It should be noted that the beginning NAV indicated for each of Series1 through Series3 does not include the exercise price. For example, in Series3, the beginning per unit or share value of $907.50 is 75% of the value of the underlying property, the remaining 25% of the underlying property representing the exercise price.

As indicated in FIG. 6, the exercise price of an existing Open-end Fund Options Plan Series is generally stored and retrieved. However, the exercise price may be easily calculated from the data in FIG. 8. If we assume that the exercise price is 25% of the underlying price and the beginning value is 75% of the underlying property, then the exercise price per share or unit for each Series is easily calculated. The exercise price per share or unit for Series3 is $302.50, which is calculated by dividing the beginning value ($907.50) by 0.75 and multiplying this amount by 0.25. Using the same calculation, the beginning exercise price based on the original cost of each of Series1 and Series 2 is $250.00 and $275.00, respectively.

Referring to FIG. 7, the financing adjustment for each of Series1, Series2 and Series3 is shown at the current valuation period. The financing adjustment can be confirmed by subtracting the beginning account value from the beginning value of the underlying property for each series. As shown in FIG. 8, the value of the underlying property is based on an NAV of $1,210.00. For Series1, the value of the underlying property is $1,210,000 (1210 x 1,000) and the beginning account value is $944,775.00, which results in a financing adjustment of$265,225.00 (1,210,000 - 944,775.00). This calculated amount is equal to the amount indicated in column 3 of FIG. 7 for Series1. A similar calculation can be made to confirm the value of the financing adjustments shown in FIG. 7 for Series2 and Series3.

Next, the financing cost, if any, must be determined for the valuation period. This example assumes that the terms of the options include a financing charge and that such charge is specifically allocated to the options. Alternatively, option plans may exclude financing, the service provider may forego or defer earnings as a surrogate to financing, or financing costs may be allocated on another economically reasonable basis. In the present example, the finance cost is assumed as 3% of the beginning exercise price, which is shown as the finance charge in column 6 of FIG. 7. The finance cost or charge is subtracted from the provisional account value plus the allocated profits, etc to derive a tentative account value. For Series1, the provisional account value is $1,210,000.00 plus a 10% allocated net of $121,000.00 less the finance charge of $7,956.75 for a tentative account value of $1,323,043.25. Since the problem is concerned with calculating an ending shareholder account value for each series, the finance adjustment which was added in a previous step is subtracted from the tentative account value to calculate the ending account values for Series1, Series2 and Series3.

The ending values will be stored and used in the next valuation period. Tables 1.1 and 1.2 below give beginning account values for fund shares and beginning and provisional account values for option Series for the next valuation period based on the data in FIGS. 7 and 8.

**Table 1.1**

| Account | Number of Shares/Units | Beginning Shareholder Account ($) |
|---|---|---|
| 00001 | 10,000 | 13,310,000 |
| 00002 | 10,000 | 13,310,000 |
| 00003 | 20,000 | 26,620,000 |
| 00004 | 5,000 | 6,655,000 |
| 00005 | 5,000 | 6,655,000 |
| Total | 50,000 | 66,550,000.00 |

**Table 1.2**

| Account | Number of Shares/Units Subject to Options | Beginning Value ($) | Beginning Optionholder Account Value ($) | Financing Adjustment ($) | Provisional Account Value ($) |
|---|---|---|---|---|---|
| | | | | | |
| SERIES1 | 1,000 | 1,057.82 | 1,057,818.00 | 273,182.00 | 1,331,000.00 |
| SERIES2 | 909.09 | 1,039.25 | 944,775.00 | 265,225.00 | 1,210,000.00 |
| SERIES3 | 826.45 | 1,019.43 | 842,500.00 | 257,500.00 | 1,100,000.00 |

Thus the administration system according to an embodiment of the present invention is updated on each option revaluation date for the values indicated above. The new values are stored and retrieved for future valuation.

Accordingly, a computer implemented method for incentivizing an open-end fund service provider to defer compensation owed to the service provider is provided that includes the step of granting the service provider an award of options in an investment fund having a share price based on a net asset value of the fund. The options have a specified term and an initial value based on the initial net asset value at grant which is adjusted based on the change in the net asset value of the fund.

Also provided is a computer-based administration system preferably utilizing a spreadsheet program such as Microsoft Excel® to calculate the value of one or a series of options or similarly leveraged compensation arrangements granted by an Open-end Fund to Service Providers, summarize the values of those options, calculate the change in values since the prior valuation, and calculate expenses associated with the options, and calculate the NAV of shares offered and/or redeemed by the granting Open-end Fund. A database schema has also been developed for storing and retrieving these values.

Having described illustrative embodiments of the present invention with reference to the accompanying drawings, it will be appreciated that aspects of the present invention are not limited to those precise embodiments, and that various changes and modifications can be effected therein by one of ordinary skill in the art without departing from the scope or spirit of the invention as defined herein.

It is also to be understood that the following claims are intended to cover at least all of the generic and specific features of the invention herein described and all statements of the scope of the invention which, as a matter of language, might be said to fall therebetween.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described above are implementable, at least in part, using a software-controlled programmable processing device such as a Digital Signal Processor, microprocessor, other processing devices, data processing apparatus or computer system, it will be appreciated that a computer program or program element for configuring a programmable device, apparatus or system to implement the foregoing described methods is envisaged as an aspect of the present invention. The computer program or program element may be embodied as source code and undergo compilation for implementation on a processing device, apparatus or system, or may be embodied as object code, for example. The skilled person would readily understand that the term computer in its most general sense encompasses programmable devices such as referred to above, and data processing apparatus and computer systems.

Suitably, the computer program or program element is stored on a carrier medium in machine or device readable form, for example in solid-state memory, optical memory, magneto-optical memory or magnetic memory such as disc or tape, and the processing device utilises the program, program element or a part thereof to configure it for operation. The computer program or program element may be supplied from a remote source embodied in a communications medium such as an electronic signal, including radio frequency carrier wave or optical carrier wave. Such carrier media are also envisaged as aspects of the present invention.

## Claims

1. A method for incentivizing an open-end fund service provider to defer compensation owed to the service provider comprising the steps of granting the service provider an award of options in an investment fund having a share price based on a net asset value, the options having a specified term and an initial value based on the net asset value, and adjusting the value of the options based on the change in the net asset value of the fund.

2. The method of claim 1 wherein the investment fund is an open-end fund.

3. The method of claim 1 or 2 wherein the options are granted to an investment advisor for services provided to the investment fund and wherein the initial value is a percentage of the net asset value.

4. The method of any preceding claim wherein the investment fund comprises an offshore open-end investment fund.

5. The method of any preceding claim wherein the granted options may be redeemed for at least one of shares in the investment fund, shares in another fund, a cash value in an amount equal to a share award less an exercise price and a cash value equal to the value of an index.

6. The method of any preceding claim further comprising the step of establishing the investment fund as a partnership and having the partnership grant the options to the service provider.

7. The method of any preceding claim further comprising the step of calculating the value of the options and net asset value of the fund at periodic intervals.

8. The method of any preceding claim wherein the value of the options are calculated at least as often as the value of shares in the fund are calculated.

9. The method of any preceding claim further comprising the step of calculating a beginning value of the granted options and storing the beginning value in a database for future valuations of the options.

10. In an investment fund having purchasable and redeemable shares at a value based on a net asset value of the properties held in the fund, a method of incentivizing at least one of an investment advisor and service provider to forego compensation payable to the at least one of the investment advisor and service provider for services provided to the investment fund comprising the steps of calculating a beginning value of share of the investment funds, granting to the at least one of the investment advisor and service provider in lieu of the payable current compensation an award of options in shares of the investment fund at the beginning value and revaluing the beginning value of the options based on a change in net asset value of the fund.

11. The method of claim 10 further comprising the step of maintaining in a database a record of the shares of the fund and the options granted to the at least one of the investment advisor and service provider and the beginning values of each.

12. The method of claim 7 wherein the awarded options comprise a plurality of series of options.

13. The method of claim 10 or 11 further comprising the step of granting an award of options to third parties having one of an agency, employee or contractual arrangement with at least one of the investment advisor, service provider and investment fund.

14. The method of any one of claims 10, 11 or 13 wherein the investment fund is an open-end fund.

15. The method of any one of claims 10, 11, 13 or 14 wherein the investment fund comprises an offshore open-end investment fund.

16. The method of any one of claims 10, 11 or 13 to 15 wherein the granted options may be redeemed for at least one of shares in the investment fund, shares in another fund, a cash equivalent in an amount equal to a share award less an exercise price and a cash value equal to the value of an index.

17. The method of any one of claims 10, 11 or 13 to 16 further comprising the steps of establishing the investment fund as a partnership and having the partnership grant the options to the at least one of the investment adviser and service provider.

18. The method of any one of claims 10, 11 or 13 to 17 further comprising the step of calculating the value of the options and the investment fund shares at periodic intervals.

19. The method of claim 18 wherein the value of the options are calculated at least as often as the value of the investment fund shares are calculated.

20. A computer-implemented method for administering an open-end fund having outstanding shares representing a shareholder's interest in the open-end fund and outstanding option units representing an option holder's interest in shares of the open-end fund, the method comprising the steps of determining a value of the shares and determining a value for the options units at a first valuation period, allocating an amount owed by the open-end fund to at least one of the shareholders and option holders, recalculating a value of the shareholder's shares that factors in the amount owed by the open-end fund, recalculating a value of the option units that factors in the amount owed by the open-end fund, and storing the recalculated value for each of the shares and the option units as ending values.

21. The computer-implemented method of claim 20 further comprising the step of dividing the option unit ending value by the number of option units to calculate an ending value per unit.

22. The computer-implemented method of claim 20 or 21 further comprising the step of dividing the shares ending value by the number of shares to calculate an ending value per share.

23. The computer-implemented method of any one of claims 20 to 22 wherein the step of determining the value of the shares further comprises the step of retrieving the value from a database.

24. The computer-implemented method of any one of claims 20 to 23 wherein the step of determining the value of the option units further comprises the step of retrieving the value from a database.

25. The computer-implemented method of any one of claims 20 to 24 wherein the step of determining the value of the option units further comprises the step of calculating a financing adjustment for the option units.

26. The computer-implemented method of any one of claims 20 to 25 further comprising the step of retrieving the ending value for the shares and ending value of the option units and calculating in a second valuation period new ending values for the shares and the option units based on allocated amounts owed to each of the option holders and shareholders.

27. In a system for valuing a net asset value of an open-end fund having shares issued to shareholders and options in the shares granted to option holders, a computer-assisted method of calculating the net asset value of the open-end fund comprising the steps of determining a value of the shareholder's shares at a first valuation period, determining a value for the options granted by the open-end fund, allocating an amount owed by the open-end fund to at least one of the shareholders and option holders, recalculating a value of the shareholder's shares that factors in the amount owed by the open-end fund, recalculating a value of the option holder's shares that factors in the amount owed by the open-end fund, and storing in a database the recalculated value for each of the shareholder's shares and option holder's shares.

28. A method of compensating an open-end fund service provider comprising the steps of awarding the service provider a grant of options in the open-end fund the options having been valued according the steps of determining a value of the shareholder's shares at a first valuation period, determining a value for the options granted by the open-end fund, allocating an amount owed by the open-end fund to at least one of the shareholders and option holders, recalculating a value of the shareholder's shares that factors in an amount owed by the open-end fund, recalculating a value of the option holder's shares that factors in an amount owed by the open-end fund, and storing the recalculated value for each of the shareholder's shares and option holder's shares.

29. A system for administering an open-end fund having outstanding fund shares issued to account holders and options granted to option holders comprising a database for storing beginning values for each of the outstanding shares and options, and an administrative engine in communication with the database for calculating new values for each of the fund shares and options based on a change in a net asset value of the open-end fund.

30. The system of claim 29 further comprising a general ledger accounting system in communication with the administrative engine.

31. The system of claim 29 further comprising a portfolio accounting system in communication with the administrative engine.

32. The system of claim 29 wherein the new value for fund shares is calculated on a per account holder basis.

33. The system of claim 29 wherein the new value for options is calculated on a per option holder basis.

34. The system of claim 29 wherein the new values are stored in the database.

35. A system for administering an open-end fund having outstanding fund shares and options granted by the open-end fund comprising means for storing beginning values for each of the outstanding shares and options, and calculating means in communication with the database for calculating new values for each of the fund shares and options based on a change in a net asset value of the open-end fund.

36. The system of claim 35 wherein the calculating means comprises computer readable program code embodied on a program storage device for causing a digital processing apparatus to calculate the new values for each of the fund shares and options based on a change in the net asset value of the open-end fund.

37. The system of any on of claims 29 to 36, comprising a computer system.

38. The system of any one of claims 29 to 26, comprising a network of computer systems.

39. A computer program product comprising computer or machine readable program elements arranged to implement the method of any one of claims 1 to 28 in a computer.
